# EUROPEAN PATENT APPLICATION

(11) **EP 2 336 196 A1**
(43) Date of publication of application: **22.06.2011**
(21) Application number: 09179756.3
(22) Date of filing: 17.12.2009
(51) Int. Cl.: C08B 37/00, C08H 8/00, D21C 3/20

(54) **Treatment of lignocellulosic feed**

(71) Applicant: Shell Internationale Research Maatschappij B.V., 2596 HR The Hague (NL)
(72) Inventor: Von Hebel, Klaas Lambertus, 1031 HW Amsterdam (NL); Van der Heide, Evert, 1031 HW Amsterdam (NL); Mackay, Munro, 1031 HW Amsterdam (NL); Zhang, Ting, 1031 HW Amsterdam (NL)
(74) Representative: Matthezing, Robert Maarten

(57) **Abstract**

The present invention provides a process for treating lignocellulosic biomass material, comprising the steps of:
(a) contacting the lignocellulosic biomass material with an aqueous stream at a temperature in the range of from 150°C to 220 °C to obtain a first liquid stream comprising hydrolysed hemicellulose and a second stream comprising cellulose and partially decomposed lignin as solids;
(b) separating the first stream from the second stream;
(c) contacting the second stream with a mixture of water and a solvent soluble in water at a temperature of at least 50°C and at a pressure of below 4 bar (a) to obtain a solids stream comprising cellulose and a liquid stream comprising dissolved lignin, and
(d) separating the mixture obtained in step (c) into a stream comprising cellulose as a solid and a liquid stream comprising dissolved lignin.

## Description

### Field of the invention

The present invention relates to a process for treatment of lignocellulosic biomass material to separate the lignocellulosic biomass material into cellulose, hemicellulose and lignin in order to make it suitable for production of hydrocarbon compounds.

### Background of the invention

With the diminishing supply of crude oil, the use of renewable energy sources is becoming increasingly important as a feedstock for production of hydrocarbon compounds. Plants and animal biomass are being used to produce liquid and gaseous hydrocarbon compounds. One of the advantages of using biomass is that the C02 balance is more favourable as compared with the conventional hydrocarbon feedstock.

One of the most commonly used biomass material used is lignocellulosic material for instance, agriculture waste, forest residue, wood chips, straw, chaff, grain, grasses, corn, corn husks, weeds, aquatic plants, hay or any cellulose containing biological material or material of biological origin. These biomass materials primarily consist of cellulose, hemicellulose, and lignin bonded together in a complex gel structure along with small quantities of extractives, pectins, proteins, and ash. Cellulose and hemi-cellulose, when hydrolysed into sugars, can be further converted into ethanol and other useful products and intermediates through well established microbiological fermentation technologies, or through thermochemical conversions, such as aqueous phase reforming.

Lignin present in the lignocellulosic biomass material is an attractive renewable replacement for phenolic polymer feedstocks. This is due to its polyphenolic nature and low toxicity, together with properties such as dispersing, binding, complexing and emulsifying, thermal stability, specific UV-absorbing, water repellent and conductivity characteristics.

Separation of cellulose from other biomass constituents is complicated by the fact that lignin is intertwined and linked in various ways with cellulose and hemicellulose. Successful commercial use of the individual constituents of biomass is dependent on the ease of their accessibility for further processing. Existing processes for obtaining cellulose, sugars and lignin from lignocellulosic biomass involve chemical and/or enzymatic treatment of the biomass to hydrolyse cellulose and hemicellulose into the respective sugars. Many of the current chemical processes for conversion of lignocellulosic biomass to cellulose, sugars and lignin require expensive solvents. Other processes require extreme hydrolysis conditions such as heating the lignocellulosic biomass at an elevated temperature, which result in degradation of released sugars. Enzymatic processes require the use of expensive biocatalysts and extremely stringent processing conditions.

Existing processes for the recovery of lignin known in the art include the sulfite or the Kraft wood pulping processes wherein lignin is recovered as lignosulfonate containing significant amounts of contaminants such as free sulphurous acid and sulphates. The recovered lignin molecules lack stereoregularity, with repeating units being heterogeneous and complex as described in US 5,866,642 and US 5,202,403. This requires further treatment in order to produce quality products. The costs associated with the purification and functionalisation are high and therefore limit the commercial use of the high quality products.

The use of organic solvents for extraction of sugars and lignin is known to improve the quality of the resulting lignin, but the use of a catalyst in combination with various types of solvents under severe conditions often produces lignin having altered reactivity. The publication "Pretreatment of Miscanthus x giganteus using the Ethanol Organosolv Process for Ethanol Production" by Nicolas Brosse, Poulomi Sannigrahi and Arthur Ragauskas, Ind. Eng. Chem. Res. 2009, 48, 8328-8334, discloses the use of an organosolv process using ethanol and sulphuric acid for the pretreatment of lignocellulose. However, the process conditions use high pressure that requires expensive material, and increases explosion and fire hazard when employed on an industrial scale. Moreover, the use of ethanol in the first pretreatment stage requires separation of the ethanol for useful recycling from this stage already, which is energy consuming and costly due to the size of the streams to separate.

Accordingly, most of the current processes for obtaining sugars and lignin from lignocellulosic biomass are either expensive and or require extreme conditions. Therefore, there is a need for an economical process for low cost production of sugars and lignin from lignocellulosic biomass material. The process should be able to separate sugars and lignin efficiently, and yield lignin and sugars of desirable characteristics. Further, the process should be able to separate lignocellulosic biomass material to cellulose, sugars and lignin under normal or mild conditions of temperature and pressure to avoid degradation of sugars.

### SUMMARY OF THE INVENTION

Accordingly, the present invention provides A process for treating lignocellulosic biomass material, comprising the steps of: a) contacting the lignocellulosic biomass material with an aqueous stream at a temperature in the range of from 150°C to 220 °C to obtain a first liquid stream comprising hydrolysed hemicellulose and a second stream comprising cellulose and partially decomposed lignin as solids; b) separating the first stream from the second stream; c) contacting the second stream with a mixture of water and a solvent soluble in water at a temperature of at least 50°C and at a pressure of below 4 bar (a) to obtain a solids stream comprising cellulose and a liquid stream comprising dissolved lignin, and d) separating the mixture obtained in step (c) into a stream comprising cellulose as a solid and a liquid stream comprising dissolved lignin.

The cellulose obtained can preferably be further subjected to an enzymatic saccharification to obtain a solid stream comprising hydrolysed cellulose which can then be further subjected to microbiological fermentation or thermochemical conversion.

### Brief description of the drawings

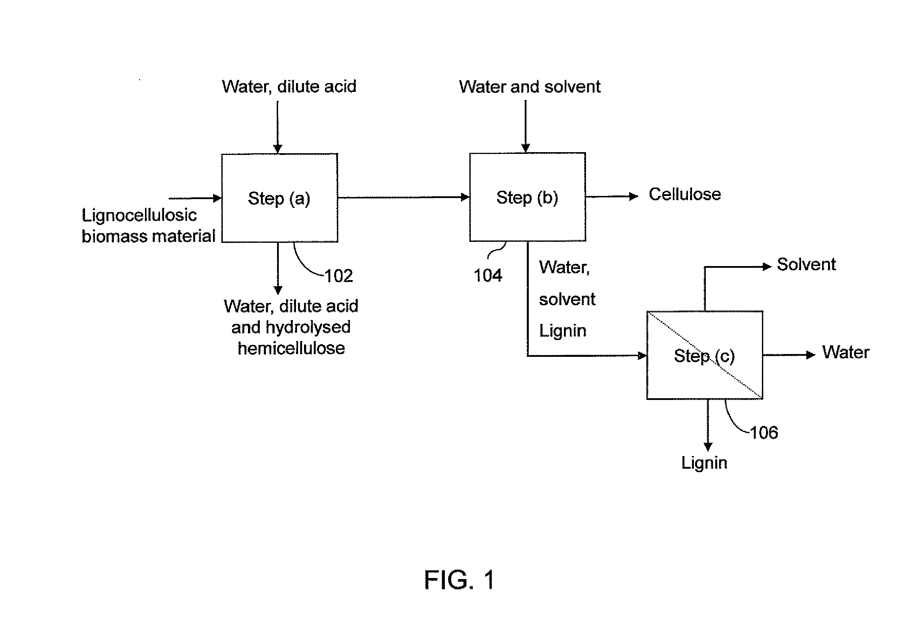

Figure 1 shows a schematic diagram of the process according to the invention.

### Detailed description

It has now been found that lignocellulosic biomass material can be efficiently separated into hemicellulose, cellulose and lignin when subjected to a series of steps comprising subjecting the lignocellulosic biomass material to an elevated temperature in presence of water and optionally a dilute acid to hydrolyse the hemicellulose, separating the resultant product streams to remove the hydrolysed hemicellulose and contacting the residual product stream to a mixture of ethanol and water to obtain a separate lignin stream and a cellulose stream. The cellulose stream preferably may be further processed for the production of chemicals such as ethanol, while the sugars and lignin streams may advantageously be further processed for production of chemicals and intermediates.

Lignocellulosic biomass material as referred to in the present invention is the naturally obtained cellulosic material comprising agriculture waste, forest residue, wood chips, straw, chaff, grain, grasses, corn, corn husks, weeds, aquatic plants, hay and any cellulose containing biological material or material of biological origin, also including municipal waste or waste. The subject process is in particularly suited for conversion of non-wood lignocellulose, particularly grass-derived lignocellulose. Typical grasses include wheat straw, but also miscanthus, sweet sorghum and bamboo.

The major constituents of lignocellulose typically include hemicelluloses in an amount of from 20 to 30%wt., an amorphous polymer of five and six carbon sugars; lignin in an amount of from 5 to 30%wt., a highly cross-linked polymer of phenolic compounds; and cellulose in an amount of from 30 to 40%wt, a highly crystalline polymer of cellobiose, a glucose dimer. The cellulose, hemicellulose, and lignin are bonded together in a complex gel structure along with small quantities of extractives, pectins, proteins, and ash. Cellulose and hemicellulose, when hydrolysed into their sugars, can be converted into ethanol or other useful compounds through well established fermentation technologies. These sugars may also advantageously form the feedstock for production of a variety of chemicals and polymers, through microbial fermentation or through thermochemical processes, such as aqueous phase reforming.

The pretreatment process of the lignocellulosic biomass material according to the present invention is explained in detail in conjunction with the process flow diagram shown in FIG. 1. As shown the process includes in step (a) treating (102) the biomass material at an elevated temperature in the presence of water and optionally a dilute acid, preferably an organic acid such as formic acid and/or acetic acid. The biomass-to-liquid ratio in the range of from 2:1 to 1:50, preferably of from 1:5 to 1:20. In step (a), a large part of the hemicellulose is usually hydrolysed to monomer sugars. The sugars formed are mainly C5 sugars such as xylose. Further, the covalent linking of lignin to hemicellulose is typically weakened. In addition, the acetate groups present in the lignocellulosic biomass material can be removed as acetic acid.

Step (a), depicted as (102) in Fig.1, is carried out in a reactor which is preferably a batch reactor, a continuously stirred tank reactor or a slurry reactor having an arrangement to move the lignocellulosic biomass mechanically. In operation, the reactor contains the lignocellulosic biomass material on which the mixture of water and acid is sprayed The lignocellulosic biomass material preferably has an average constituent thickness of at most 2.5 cm, more preferably the thickness is up to 0.2 cm.

The preferential presence of acid serves the purpose of a catalyst thereby aiding the hydrolysis of the hemicellulose and also helps in destructuring (decomposing) of the lignin. The organic acid preferably used for this purpose in the present invention is preferably oxalic or propionic acid, more preferably formic acid, yet more preferably acetic acid. The acetic acid functions as an auto catalyst and therefore can be reused and also reduces the residence time of the reaction. The percentage of organic acid in water used for the purpose of the present invention is in the range of 25 to 65%, more preferably in the range of 35 to 55%, most preferably in the range of 40 to 50 %. In a preferred embodiment of the present invention, an inorganic acid such as dilute sulphuric acid can also be present, acting as a catalyst, and permitting to start up the reaction under autocatalytic conditions, i.e. enhance the formation of acetic acid from the lignocellulose.

Step (a) (102) is preferably carried out at a temperature of at least 80°C, preferably in the range of 90°C to 120°C and at a pressure of at least 1 bar (a), preferably in the range of 1 bar (a) to 5 bar (a). The upper temperature limit in step (a) is largely determined by the thermal stability of the organic acids used. A temperature range of 220 to 240 °C is preferred when acetic acid is used. However, the temperature range of 150 to 200°C is preferred in the case of oxalic acid or formic acid, and preferably is at most 195°C, more preferably at most 180°C if formic acid is employed, since this acid becomes thermally at higher temperatures.

More preferably, step (a) is carried out at a temperature of 165°C in the case of formic acid. Step (a) is preferably carried out for a time period typically in the range of from 0.3 to 10 hours, more preferably in the range of from 0.5 to 5 hours.

Step (a) results in the formation of two streams: a liquid stream comprising hydrolysed hemicellulose (monomeric sugars), mainly xylose, water and dilute acid; and a solid stream comprising cellulose and destructured lignin. As previously mentioned, step (a) is catalysed by the presence of the organic acid water mixture. The organic acid/water mixture remaining at the end of this step is preferably processed for the recycling of the organic acid which is preferably carried out by methods such as pressure swing distillation, extraction or extractive distillation. These methods of recycling are well known in the prior art and have been well established in the case when formic acid is the organic acid used.

The two streams formed as a result of the cooking step (a) are then subjected to separation in step (b). Step (b) may preferably be executed using suitable separation techniques, such as for example a screw press. The separation step preferably involves removal of liquid from the solid stream by pressing it out from the slurry resulting in the formation of two separate streams; a solid stream and a liquid stream. It should be appreciated that the cooking step and the separation step can be carried out simultaneously.

The liquid stream containing the dissolved hydrolysed hemicellulose may be further processed to obtain furfural derivatives such as levulinic acid. The liquid stream may also be subjected to a fermentation to form cehc ial fuel components or intermediates such as ethanol, butanol, or lipids. The liquid stream in an embodiment of the present invention may also be subjected to an anaerobic digestion reaction to form methane that can be further used as fuel.

The solid stream formed at the end of the separation step, preferably in a screw press, is preferably subjected to an washing step (c), depicted as step (104) in Fig.1 . The purpose of the washing step (104) is to separate the lignin and the cellulose. During the step (104), the solid stream is washed with alcohol and water mixture at mildly elevated temperature in the range of from 40 to 100 degrees Celsius and a pressure below 4 bar (a), preferably in the range of from 2 to 4 bar (a). The mildly elevated temperature aids in the dissolution of the lignin in the alcohol-water mixture. The temperature is optimized at preferably 50 degrees Celsius as a higher temperature can lead to the evaporation of the alcohol and lower temperature can be less effective in aiding dissolution of lignin. The residence time of the reaction is preferably 60 minutes. The alcohol used in the present invention preferably has less than about 4 carbon atoms to so that it can be water-miscible. Preferably, methanol, ethanol, n- or isopropanol are used, more preferably ethanol is used. The percentage of alcohol in water used in the present invention is preferably in the range of from 5% to 10% volume. At the end of the washing step (104) a liquid lignin stream is obtained as it gets partially dissolved in the alcohol and water mixture. The cellulose which is primarily the only component left remains as an undissolved cake and can be differentiated as a solid stream that remains at the end of the washing step. The cellulosic stream obtained is essentially free of reprecipitated lignin because the lignin and other dissolved materials remain in solution at all temperatures of the reaction. Hence, a solid stream comprising undissolved cellulose and a liquid stream comprising lignin constitute the product streams of the washing step 104.

The washing step (c) is followed by a separation step (d) in order to recover the lignin and the cellulose. In step (d), The product streams formed are preferably subjected to a filtration step, more preferably using a filter press, preferably vacuum aided to speed up the process. The solid stream containing cellulose is retained on the filter mesh and the liquid lignin stream is collected as a filtrate in the vessel. This cellulose may be dried before it is subjected to further processing.

The liquid lignin stream obtained as the filtrate after the separation of cellulose may then be further processed for the recovery of lignin. The liquid lignin stream is preferably subjected to a separation step (e), more preferably as an evaporation (106) in an evaporator whereby the alcohol from the alcohol water mixture gets evaporated leading to the precipitation of lignin which is dissolved in it. This precipitated lignin is filtered so that it gets retained on the filter mesh and can eventually be isolated. The ethanol and the liquid water stream obtained at the end of the step (106) are preferably recycled.

Generally, the cellulose-rich solid product obtained by the aforementioned process may advantageously be used in industrial cellulose applications directly, with or without drying, or subjected to further processing to either modify the cellulose in some way or convert it into glucose. The cellulose-rich solid product can be processed into paper products any convenient methods (Macdonald, Papermaking and Paperboard Making, Vol. 3, TS 1105.J66, 1969). The solid product is also useful as fluff pulp, which is commonly used in absorbent applications such as diapers and consumer wipes.

Cellulose recovered from the solid phase is particularly suitable for manufacturing dissolving pulp (also known as quadrature.-cellulose), when its purity is 85% by weight or more. In some cases, cellulose of that purity is obtained simply by washing and drying the separated solid phase. If needed, the recovered cellulose can be further purified using various techniques, such as bleaching. Cellulose having a purity of 95 wt % or more can be obtained in this manner. The cellulose obtained in the process of the invention in most cases is easily and rapidly hydrolyzed to glucose and soluble glucose oligomers. Although the invention is not limited to any theory, it is believed that the resistance of cellulose from biomass fractionation processes to enzymatic hydrolysis is due at least in part to the presence of lignin on the surface of the cellulose fibers. The lignin is believed to form a physical barrier to water, thus causing the hydrolysis to proceed slowly. In this invention, the efficient removal of lignin exposes more cellulose at the surface of the fibers, allowing better contact with water (and added enzymes or other catalyst), and therefore increasing the rate of reaction. The cellulose can be catalytically or thermally converted to various organic acids, alcohols and other materials.

1. Lignin produced in accordance with the invention has typically high purity. It is essentially free from sulphur and other chemicals and can be used as a fuel. As a solid fuel, lignin is similar in energy content to coal. Lignin may act as an oxygenated component in liquid fuels, to enhance octane while meeting standards as a renewable fuel. The lignin produced herein can also preferably be used as polymeric material, and/or as a chemical precursor for producing lignin derivatives. The lignin can advantageously be used in the preparation of polyphenolic polymers such as Bakelite, usually being blended with formaldehyde up to 20%wt.. Accordingly, the present invention also preferably provides for a process comprising converting the lignin into a phenol formaldehyde resin; blending the lignin into bitumen as a binder; and/or converting the lignin into a phenolic intermediate.

The process according to the invention is further illustrated by means of the following non-limiting simulated example.

### Example 1

In a process line-up as shown in the Figure, 1.01 kg of bagasse with a solid to liquid ratio of 1:2 was subjected to the pretreatment process illustrated in FIG. 1. The bagasse was cooked using 0.24kg of steam in the presence of mixture of 0.02 kg of formic acid and 0.98kg of process water. Further, 0.03 kg of ethanol and 0.02 kg of calcium hydroxide was used during the washing step (104). The following streams were obtained:
1.2 kg of Xylose product (10%wt in the xylose stream) and 0.01 kg of formic acid, 1 kg of cellulosic pulp (cellulose content 60% dry basis), 1% furfural, 2% ethanol, 0.5% acetic acid, 1% calcium formate and 0.06 kg of lignin.

## Claims

1. A process for treating lignocellulosic biomass material, comprising the steps of:
a) contacting the lignocellulosic biomass material with an aqueous stream at a temperature in the range of from 150°C to 220 °C to obtain a first liquid stream comprising hydrolysed hemicellulose and a second stream comprising cellulose and partially decomposed lignin as solids;
b) separating the first stream from the second stream;
c) contacting the second stream with a mixture of water and a solvent soluble in water at a temperature of at least 50°C and at a pressure of below 4 bar (a) to obtain a solids stream comprising cellulose and a liquid stream comprising dissolved lignin, and
d) separating the mixture obtained in step (c) into a stream comprising cellulose as a solid and a liquid stream comprising dissolved lignin.

2. The process according to claim 1, comprising step (e) of separating the lignin from the liquid stream obtained in step (c) to obtain precipitated lignin and an aqueous stream.

3. The process according to claim 2 comprising recycling of the aqueous stream obtained after separation of the lignin to steps (a) and/or (c). (distillation of ethanol from mixture results in precipitated lignin in water if acidic; or acidification of the solution)

4. The process according to anyone of claims 1 to 3, wherein step (a) comprises contacting the lignocellulosic biomass material with a mixture of a dilute acid and water.

5. The process according to anyone of claims 1 to 4 wherein the dilute comprises an organic acid, preferably formic acid and/or acetic acid.

6. The process according to anyone of claims 1 to 4 wherein the dilute acid comprises sulphuric acid (in an amount of 1 to 5 % of the organic acid in autocatalytic mode).

7. The process according to anyone of claims 1 to 6 further comprising a step (f), comprising subjecting the solid stream obtained in step (c) to an enzymatic saccharification to obtain a solid stream comprising hydrolysed cellulose.

8. A process according to anyone of claims 1 to 7 comprising a step (g) comprising subjecting the solid stream obtained in (f) to a microbiological fermentation, a microbiological anaerobic digestion and/or a thermochemical conversion process.

9. A process according to claims 1 to 8, wherein the lignin is removed before or after fermentation and filtration.

10. A process according to any one of the preceding claims, comprising converting the lignin into a phenol formaldehyde resin; blending the lignin into bitumen as a binder; and/or converting the lignin into a phenolic intermediate.
